# EUROPEAN PATENT SPECIFICATION

(11) **EP 2 897 465 B1**
(45) Date of publication and mention of the grant of the patent: **08.05.2019**
(21) Application number: 13839492.9
(22) Date of filing: 18.09.2013
(51) Int. Cl.: A23L 27/20, A23L 27/00

(54) **METHOD OF PRODUCING A STABLE SPRAY-DRIED COMPOSITION**
VERFAHREN ZUR HERSTELLUNG EINER STABILEN SPRÜHGETROCKNETEN ZUSAMMENSETZUNG
PROCÉDÉ DE PRODUCTION D'UNE COMPOSITION STABLE SÉCHÉE PAR PULVÉRISATION

(30) Priority: 24.09.2012 US 201213625354
(43) Date of publication of application: 29.07.2015
(73) Proprietor: International Flavors & Fragrances Inc., New York, NY 10019 (US)
(72) Inventor: HANS, Keith, Thomas, Princeton, NJ 08540 (US); HENSON, Lulu, Plainsboro, NJ 08536 (US); LAVALLEE, Christopher, Thomas, Morganville, NJ 07751 (US); POPPLEWELL, Lewis Michael, Morganville, NJ 07751 (US); WOLFF, Eric, Jesse, Chalfont, PA 18914 (US); WRIGHT, Maria, Princeton, NJ 08540 (US)
(74) Representative: FRKelly
(86) International application number: PCT/US2013/060290
(87) International publication number: WO 2014/047107

(56) References cited:
- WO-A1-2011/121468
- WO-A1-2011/121468
- WO-A2-2012/122010
- WO-A2-2012/122010
- US-A- 3 741 273
- US-A- 5 124 162
- US-A- 5 443 829
- US-A1- 2006 159 818
- US-A1- 2011 059 205
- US-A1- 2011 064 783
- REINECCIUS G A: "THE SPRAY DRYING OF FOOD FLAVORS", DRYING TECHNOLOGY, TAYLOR & FRANCIS, PHILADELPHIA, PA, US, vol. 22, no. 6, 1 June 2004 (2004-06-01), pages 1289-1324, XP001200326, ISSN: 0737-3937

## Description

### Introduction

This application claims priority from U.S. Application Serial Number 13/625,354, filed September 24, 2012.

### Background of the Invention

In the food industry, spray drying, freeze-drying, vacuum continuous belt drying, and reduced pressure-low temperature drying with a vacuum dryer have been used to produce dry powders of flavor ingredients such as, for example, dry extracts of animals and plants.

Spray drying is a common industrial method for drying liquid solutions or slurries by spraying into a stream of hot gas. It is a rapid, one-step process for converting the feed liquid into a powder. Usually the drying gas is air, but nitrogen can also be used for special products needing oxygen-free conditions. The most common feed materials are aqueous-based solutions, emulsions and suspensions, where water is evaporated in the dryer. The liquid feed is fed to an atomizer, which is a device that breaks up the liquid stream into tiny droplets. This atomization takes place within the drying chamber so that the droplets are immediately exposed to hot air that initiates rapid moisture evaporation. The droplets become small particles of powder as the moisture is evaporated and they fall to the bottom of the drying chamber. Pressure nozzles, rotary disks, two-fluid nozzles, and the like are used as the atomizing unit. In many cases, the mean particle size (diameter) of the resulting dry powder is about 20 µm to 500 µm, and the drying time is as short as 5 to 30 seconds (see, Handbook of Chemistry and Engineering (1999) revised sixth edition, Maruzen Corporation, p. 770, p. 780). A four-fluid nozzle has also been developed, which has enabled mass-scale spray drying with a liquid droplet having a mean particle size of several micrometers.

The spray drying method is used in many cases of mass scale production. In general, to produce a large volume of powder in a short period of time, a solution or slurry is fed at a fast feed rate into a spray dryer, while the inlet temperature of the spray dryer and the outlet temperature thereof are elevated as high as possible, to dry the slurry at a high speed. For example, milk is dried at an inlet temperature of the spray dryer of 150 to 250°C and yeast is dried at the inlet temperature of 300 to 350°C. Drying at such high temperatures may negatively impact the flavor of the raw material itself and produce a dry powder with a burned odor. However, spray drying at a low temperature to avoid these disadvantages can increase process times and costs. See US 2005/0031769 and US Patent No. 6,482,433.

Spray-dried encapsulated flavors are created during the drying process when the aqueous carrier slurry forms a shell around the normally oil-based flavor core. During the drying process, a thin film of carrier material rapidly forms around the atomized droplet and selectively allows water to evaporate while retaining the flavor oil (Thijssen & Rulkens (1968) De Ingenieur 80:45-56). The shell protects the core against deterioration and volatile evaporation, but also allows the core to be released under desired conditions, for example, dissolution in water.

There has been a long felt need to spray dry natural and synthetic materials to provide intense fresh, authentic consumer preferred flavors in foodstuffs and other flavor-containing products. Likewise, there is a similar need to spray dry natural and synthetic materials to provide intense, fresh, authentic consumer preferred fragrances in consumer products.

WO 2012/122010 A2 is an international patent application which discloses spray-dried compositions capable of retaining volatile compounds and methods of producing the same. WO2012122010 also discloses the powders produced by such methods.

WO 2011/121468 A1 is an international patent application which discloses a process for the preparation of solid capsules comprising flavours, in which an emulsion comprising flavour or fragrance, a natural extract comprising saponins, water and a water-soluble biopolymer having a molecular weight below 100 KDa is spray-dried. WO2011121468 (A1) also discloses the solid capsules as such and products containing them.

### Summary of the Invention

The invention is as set forth in the claims. The invention provides a method of producing a stable spray-dried flavor composition, the method comprising: preparing an emulsion from a flavor composition comprising a flavor that contains volatile compounds; a solvent; a carrier material; and an emulsifier or surfactant, wherein the flavor and the carrier material comprise between 40% and 70% by weight of the emulsion, spray drying the emulsion in a spray dryer having an inlet temperature of less than 100°C and an air inlet dew point - 10°C to 5°C, wherein the volatile compounds are present in the spray-dried flavor composition in an amount that is at least 20% of the volatile compounds originally contained in the flavor, and wherein the spray-dried flavor composition includes quillaja extract, as an emulsifier between 0.2% to 0.5% of the spray-dried flavor composition.

In accordance with other embodiments of the invention, the volatile compounds are acetaldehydes, dimethyl sulfides, ethyl acetates, ethyl propionates, methyl butyrates, or ethyl butyrates. In yet other embodiments, the volatile compounds have a boiling point of less than 200°C, less than 100°C, or less than 60°C.

The composition fed to the dryer includes a carrier material and a solvent, such as a volatile solvent, wherein the flavor and carrier comprise between 40% and 70% of the emulsion. For the purpose of the invention, the flavor and carrier materials can be in either liquid or solid form or a combination thereof. In addition, said flavor can contain a volatile solvent. In yet other embodiments, the flavor is prepared as an emulsion and the volatile compounds are present in the emulsion in an amount that is at least 80% of the volatile compounds originally contained in the flavor. Still further embodiments include the use of nitrogen or carbon dioxide in the spray dryer. In certain embodiments, the air inlet temperature is in the range of 40°C to 99°C. Flavor compositions produced with the method according to the invention may have a water activity in the range of 0.1 to 0.6 and can be used in, *e.g*., a chewing gum or beverage.

### Brief Description of the Drawings

Figure 1 shows a comparison of sensory profiles of Orange Flavor between samples produced under different RH/Temperature conditions in a beverage tasting solution. *Directionally different, **Significantly different at p=0.05
Figure 2 shows a comparison of time intensity profiles of Orange Flavor between samples produced under different humidity/temperature conditions in sugar-free chewing gum. **Significantly different at p=0.05 at these elapsed times.
Figure 3 shows a comparison of sensory profiles of Berry Flavor between samples produced under different humidity/temperature conditions in a beverage tasting solution. ** Significantly different at p = 0.05.
Figure 4 shows a comparison of time intensity profiles of Berry Flavor between samples produced under different humidity/temperature conditions in sugar-free chewing gum. **Significantly different at p=0.05 at these elapsed times.
Figure 5 is a diagram of dryer airflow used in the production of the instant composition.

### Detailed Description of the Invention

It has been found that commercially available spray dryer nozzles, geometries, and circulation patterns can be used in methods of producing powders with high volatile retention and high flavor intensity, even when drying for an extended amount of time. In particular, when a conventional spray dryer is used with an inlet temperature of less than 100°C and a dew point -10°C to 5°C, higher levels of volatile compounds can be retained. Because of the increased efficiency of the method described herein, drying of flavor compositions containing volatile compounds can be achieved at relatively low temperatures compared to conventionally used methods. The resulting spray-dried flavor composition has high intensity flavor and has a high flavor/fragrance quality that is authentic to the natural source. Surprisingly, these flavor compositions maintain high flavor intensity and flavor/fragrance quality in various end-use applications after long-term storage.

Disclosed herein is a stable spray-dried flavor composition produced by spray drying a flavor that that contains volatile compounds in a spray dryer having an inlet temperature of less than 100°C and an air inlet dew point -10°C to 5°C, wherein the volatile compounds are present in the spray-dried flavor composition in an amount that is at least 20% of the volatile compounds originally contained in the flavor. For the purpose of this invention stability is defined as a flavor quality and intensity that remains acceptable for use in end use applications. Preferably, a stable spray-dried flavor composition has a shelf-life of up to three years depending on storage conditions. Consumer data, as demonstrated in the examples herein, showed statistically significant preference for the flavors composition of the present invention. The consumer preferred quality of the flavor composition is further supported by the attributes selected by consumers to describe the flavor quality of the prototypes.

Disclosed herein is a spray-dried flavor composition and a method for producing such a composition. In accordance with the present invention, a spray-dried flavor composition containing one or more volatile compounds is produced with a method according to at least claim 1, by spray drying a flavor composition in a spray dryer with an inlet temperature of less than 100°C and a dew point -10°C to 5°C so that a dry powder is obtained. In certain embodiments, the resulting spray-dried composition is further dried in a fluidized bed. As a result of the instant method, the spray-dried flavor composition retains at least 20% of the volatile compounds originally contained in the flavor.

Unless otherwise specified, a flavor of the invention is a flavor that contains one or more volatile compounds. A variety of flavors can be used in accordance with the present invention. Flavor may be chosen from synthetic flavor and flavoring aromatics, and/or oils, oleo resins and oil extracts derived from plants, leaves, flowers, fruits, and combinations thereof. Representative flavor oils include, but are not limited to, spearmint oil, cinnamon oil, peppermint oil, clove oil, bay oil, thyme oil, cedar leaf oil, oil of nutmeg, oil of sage, and oil of bitter almonds. Also useful are artificial, natural or synthetic fruit flavors such as vanilla, chocolate, coffee, cocoa and citrus oil, including lemon, orange, grape, lime and grapefruit, and fruit essences including apple, pear, peach, strawberry, raspberry, cherry, plum, pineapple, apricot and so forth. These flavors can be used individually or in admixture.

The volatile compounds of the instant flavor may include, but are not limited to, acetaldehyde, dimethyl sulfide, ethyl acetate, ethyl propionate, methyl butyrate, and ethyl butyrate. Flavors containing volatile aldehydes or esters include, e.g., cinnamyl acetate, cinnamaldehyde, citral, diethylacetal, dihydrocarvyl acetate, eugenyl formate, and p-methylanisole. Further examples of volatile compounds that may be present in the instant flavor oils include acetaldehyde (apple); benzaldehyde (cherry, almond); cinnamic aldehyde (cinnamon); citral, i.e., alpha citral (lemon, lime); neral, i.e., beta citral (lemon, lime); decanal (orange, lemon); ethyl vanillin (vanilla, cream); heliotropine, *i.e*., piperonal (vanilla, cream); vanillin (vanilla, cream); alpha-amyl cinnamaldehyde (spicy fruity flavors); butyraldehyde (butter, cheese); valeraldehyde (butter, cheese); citronellal (modifies, many types); decanal (citrus fruits); aldehyde C-8 (citrus fruits); aldehyde C-9 (citrus fruits); aldehyde C-12 (citrus fruits); 2-ethyl butyraldehyde (berry fruits); hexenal, *i.e*., trans-2 (berry fruits); tolyl aldehyde (cherry, almond); veratraldehyde (vanilla); 2,6-dimethyl-5-heptenal, *i.e*., melonal (melon); 2-6-dimethyloctanal (green fruit); and 2-dodecenal (citrus, mandarin); cherry; or grape and mixtures thereof. The composition may also contain taste modulators and artificial sweeteners.

The physical, chemical, and odor properties of selected volatile compounds are presented in Table 1.

**TABLE 1**

| Compound | MW (g/mol) | Boiling Point (°C) | Water Solubility (g/L, approx.) | Odor Descriptors* |
|---|---|---|---|---|
| acetaldehyde | 44.05 | 21 | soluble | pungent; ethereal |
| dimethyl sulfide | 62.02 | 36 | insoluble | cabbage |
| ethyl acetate | 88.11 | 77 | 90 | ethereal; fruity |
| ethyl propionate | 102.13 | 99 | 14 | sweet; fruity; ethereal |
| methyl butyrate | 102.13 | 102 | 15 | fruity; pineapple |
| ethyl butyrate | 116.16 | 121 | 6 | fruity; pineapple |

| | | | | |
|---|---|---|---|---|
| * The Good Scents Company and Merck Index, 12^{th} Ed. | | | | |

The instant invention is particularly useful in processing flavors with volatile compounds having a boiling point of less than 200°C, less than 150°C, less than 120°C, less than 100°C, less than 80°C, less than 60°C, less than 40°C, less than 20°C, or less than 0°C. Using such flavors, higher levels of volatile compounds are retained, which results in a sensory perceivable difference over conventional drying processes.

The invention further includes the use of a carrier material to enhance processing productivity and flavor intensity. Such carriers can include any sugar, sugar derivatives, modified starch, proteins, celluloses, salts, dextrins, gums, sugar alcohols, polyols, peptides, acids, carbohydrates or hydrocolloids. Particular examples of suitable materials include sugars such as sucrose, glucose, lactose, levulose, trehalose, fructose, maltose, ribose, dextrose, isomalt, sorbitol, mannitol, xylitol, lactitol, maltitol, pentatol, arabinose, pentose, xylose, galactose; hydrogenated starch hydrolysates, inulin, and oligosaccharides such as oligofructose; maltodextrins or dextrins (soluble fiber); hydrocolloids such as agar, gum acacia, modified gum acacia, sodium alginate, potassium alginate, ammonium alginate, calcium alginate or carrageenan; gums; polydextrose; celluloses such as sodium carboxymethylcellulose, enzymatically hydrolyzed carboxy methyl cellulose, methyl cellulose, hydroxypropyl cellulose and hydroxypropyl methyl cellulose; proteins such as gelatin, pea protein, soy and whey protein isolates and hydrolyzates, and sodium caseinates; and derivatives and mixtures thereof. The carrier can be selected based upon, amongst other factors, the desired flavor, authentic taste and intensity to be achieved.

The flavor and carrier material are dissolved or emulsified in a solvent and subsequently spray-dried. In some embodiments, the solvent is water. In other embodiments, the solvent is not water. In yet further embodiments, the solvent is a volatile solvent. In still other embodiments, the solvent is a mixture of water and a volatile solvent. As is known in the art, a volatile solvent is a nonaqueous liquid with solvent properties with the characteristic of evaporating readily at room temperature and atmospheric pressure. Volatile solvents of particular use in accordance with the present invention include, but are not limited to, ethanol, ethyl acetate, acetone.

Flavor emulsions can be prepared according to standard preparation procedures. Briefly, the practice involves dispersing and dissolving the dry carrier materials in solvent until free of lumps. When using water as the solvent, it may be desirable to warm the water (*e.g*., to approximately 50°C) prior to adding the carrier material. The flavor is then added under constant agitation until a homogeneous mixture is obtained. The emulsion may be further subjected to high shear or homogenized to reduce oil droplet size prior to spray drying.

The emulsion contains between 40% and 70% by weight of flavor (including any solvent used to suspend the flavor) and carrier or more preferably between 55% and 65% flavor and carrier. The amount of flavor and/or carrier can be adjusted by using more or less water depending on the solubility of the carrier material and various factors related to efficient operation of the spray dryer. For example, the type and amount of carrier, amount of water, and/or amount of flavor can be adjusted so that the resulting emulsion has a viscosity suitable for feeding into a spray dryer to provide liquid droplets having a mean particle size (mean volume diameter) of between 10 µm and 200 µm. For example, when using spray nozzles, such as a three-fluid nozzle and a four-fluid nozzle, the viscosity of the feed slurry is preferably 500 cps or less, preferably 200 cps or less, and more preferably 80 cps or less. For a rotary atomizer (rotary disk), the viscosity is preferably 70,000 cps or less. Moreover, the feed slurry (*i.e*., emulsion) can be heated (*e.g*., to near the inlet temperature) or cooled (*e.g*., to 15°C) immediately before adding it to the spray dryer to modify fluidity. In addition, certain flavors, especially those that are more water-soluble, act as plasticizers thereby making processing more difficult due to stickiness. In this respect, the ratios of carrier materials can be modified. Therefore, various factors can be appropriately selected or modified for use in combination with different spray dry apparatuses.

In addition to the flavor and carrier material, an emulsifier or surfactant is also used in the production of the instant spray-dried flavor composition. Examples of suitable emulsifiers or surfactants include, but are not limited to, lecithins, sucrose esters, polysorbates (*e.g*., polyoxyethylene sorbitan monolaurate, polyoxyethylene sorbitan monooleate, polyoxyethylene sorbitan monopalmitate, polyoxyethylene sorbitan monostearate, polyoxyethylene sorbitan tristearate), proteins, gums, soap-bark extract, saponins, and the like. In the method according to the invention, only quillaja, also known as soap-bark, extract is used. Moreover, a variety of solvents can be used in the instant spray-dried flavor composition. Such solvents include, volatiles and nonvolatiles but are not limited to alcohol (*e.g*., ethanol), ethyl acetate, acetone, triglycerides, vegetable oils, animal fats, and triacetin.

A spray-dried flavor composition produced according to the method of the invention comprises between 0.2% to 0.5% of the quillaja extract or soap-bark extract as an emulsifier. The active component in quillaja extract is a saponin. In some embodiments, the quillaja extract is composed of about 10%, 20%, 30%, 40%, 50%, 60%, 70%, 80%, or 90% of saponin. Quillaja extract is available from commercial sources and may contain approximately 20% quillaja extract. In some embodiments, the spray-dried flavor composition of the invention contains 0.3% quillaja extract. In certain embodiments, the spray-dried flavor composition of the invention contains 0.2% quillaja extract.

Commercially available spray dryers can be used as in the practice of the present invention. For example, a spray dryer with a vertical parallel flow function can be used. The spray dryer should be a system with a dehumidifying and drying function. For example, a spray dryer capable of blowing a high volume of desiccated air with a dew point of less than 5°C is particularly preferable. For a spray dryer with no dehumidifying and drying function, the spray dryer is inevitably arranged with a dry dehumidifier, *e.g*., a honeycomb-type rotary dehumidifier (*e.g.,* Nichias Corporation or Sweden PROFLUTE Corporation). Suitable spray dryers include the micromist spray dryer and the hybrid granulator series manufactured by Fujisaki Electric Co., Ltd.; the fluidized spray dryer FSD with internal fluid bed as manufactured by Niro Corporation; the fluid granulation spray dryer and L-8 type spray dryer manufactured by Ogawara (Japan); the DL-21 type and GB-21 type spray dryers manufactured by Yamato Scientific Co., Ltd., and Anhydro Spray Bed Dryer manufactured by SPX Corporation.

In particular embodiments, the spray dryer is capable of generating liquid droplets (particles) having a mean particle size (mean volume diameter) of between about 10 µm to about 200 µm. Specifically, it is preferred to carry out spray drying with a spray dryer with a spray nozzle capable of generating a large volume of liquid droplets having a mean particle size of between about 10 µm to about 200 µm, preferably about 20 µm to about 150 µm, and more preferably about 30 µm to about 100 µm. When the liquid droplets are dried, a dry powder having a mean particle size (mean volume diameter) of about 10 µm to about 100 µm is preferred for retention of the flavor oil.

Among the operation conditions of the spray drying apparatus, in certain embodiments the outlet temperature of the spray drying apparatus is between 20°C and 60°C, preferably 30 to 60°C, and more preferably 40 to 60°C. For the purposes of this invention, the outlet temperature of the spray dryer means the product temperature of the dry powder in the vicinity of the powder collection part of the spray dryer. For the spray dryer of the vertical parallel flow type, the outlet temperature means the temperature (exhaust gas temperature) at the exhaust part thereof.

In other embodiments of this invention, the average inlet air temperature of the spray drying apparatus is less than 100°C. In certain embodiments, the average inlet air temperature of the spray drying apparatus is in the range of 40°C to 99°C, more preferably 60°C to 99°C and most preferably 80°C to 99°C. For the purposes herein, the average inlet air temperature is a sum total of all inlet air streams, e.g., main chamber inlet air and the inlet air to the fluid bed(s).

As a particular feature of the instant invention, it is desirable that production parameters including temperature, pressure and humidity, are controlled to achieve an air inlet dew point in the range of -10°C to 5°C. In particular embodiments, the air inlet dew point of the spray drying apparatus is 5°C or less, preferably 0°C or less, more preferably is -5°C or less, and most preferably -7.5°C or less. As is known in the art, dew point temperature is a function of air temperature and %RH and can be determined using a psychrometric chart or calculator. Dew point temperature is important as it corresponds directly to the actual amount of water in the air on a mass basis.

Once the spray-dried flavor composition is dried or partially dried in the spray drier, the resulting powder can be used in the production of food product, pharmaceuticals, consumer products and the like. Alternatively, particular embodiments feature the additional step of further drying the spray-dried flavor composition in a fluid-bed chamber attached at the outlet of the spray dryer. Accordingly, certain embodiments feature the use of an integrated fluid-bed spray dryer to produce the instant spray-dried flavor composition. This secondary drying can, *e.g*., further remove entrapped solvent, residual moisture, and/or water of molecular hydration, to provide a composition of powder particles with significantly lower moisture content that is stable in storage, *e.g*., for extended periods at ambient temperatures.

In accordance with this embodiment, the temperature of the air supplying the fluid-bed unit is maintained at or below the outlet temperature of the spray dryer in order to maintain the benefit of volatile flavor retention. Thus, the inlet temperature of the fluid-bed unit is between 40°C and 99°C, preferably 50 to 95°C, and more preferably 60 to 90°C; and the inlet dew point is in the range of -10 to 5°C.

In some embodiments, the fluid-bed has a single zone. In other embodiments, the fluid-bed unit has one, two, three or more zones, wherein each zone has a different temperature and air flow rate. In certain embodiments, the fluid-bed unit has three zones, each varying in temperature by at least 10°C. In particular embodiments, the fluid-bed unit has three zones, each varying in temperature by 10°C to 20°C. By way of illustration, dry powder from a spray dryer with an outlet temperature of 60°C could have a first fluid-bed zone at 60°C, a second bed zone of 45°C and a third zone of 25°C.

Secondary drying can continue, *e.g*., for about 5 minutes to about 5 hours, or about 10 minutes to about 1 hour, and most preferably about 20 to 40 minutes until residual moisture is reduced to a desired level. In particular embodiments, secondary drying continues until the residual moisture of the powder particles is below 5 percent.

As used herein, "dry," "dried," and "substantially dried" encompass those compositions with from about 0% to about 15% water. Preferably, the instant composition will have a water activity of 0.1 to 0.6, or more desirably 0.2 to 0.5, and most preferably from 0.2 to 0.4 wherein said levels of dryness can be achieved with or without secondary drying.

Drying can also occur in the total or partial absence of ambient air. In this respect, drying can occur in the presence of CO₂ or other drying gases (*e.g*., nitrogen). Accordingly, in particular embodiments, the air of the spray dryer is partially or wholly composed of carbon dioxide or nitrogen. In accordance with this embodiment, partial carbon dioxide or nitrogen is intended to mean a level in the range of 80-99% carbon dioxide and/or nitrogen.

Once the spray-dried flavor composition reaches the desired level of dryness, it can be used in a variety of consumer, food, or pharmaceutical products. In particular, the instant spray-dried flavor composition finds application in gums, confections, oral care products, beverages, snacks, dairy products, soups, sauces, condiments, detergents, fabric softeners and other fabric care products, antiperspirants, deodorants, talc, kitty litter, hair care and styling products, personal care products, air fresheners, cereals, baked goods and cleaners. In specific embodiments, the instant spray-dried flavor composition is used in flavoring chewing gum and beverages. Additionally, the spray-dried powder may be further processed by extrusion, coating, agglomeration, blending, compaction to impart additional functionality or benefits. While the instant invention is described in terms of the spray drying technique, the instant invention can employ other drying technologies or processes wherein the use of low humidity and temperature conditions result in improved product quality through volatile retention.

As used herein, all percentages are weight percent unless otherwise noted, L is understood to be liter, kg is understood to be kilogram, and g to be gram.

The following examples are provided.

### Example 1: Formulations for Dry Flavor Powders

A comparison between modified formulas and conventional control formulas was conducted. Exemplary Control and Modified formulas of dry flavor powders are listed in Table 2.

**TABLE 2**

| Component | Control | Modified | Control | Modified |
|---|---|---|---|---|
| Orange Flavor | 20% | 16% | | |
| Berry Flavor | | | 11% | 16% |
| Modified starch | 10% | 8% | 72% | 8% |
| Carbohydrates (*e.g*., sugar, corn syrup, maltodextrin) | 70% | 76% | 17% | 76% |

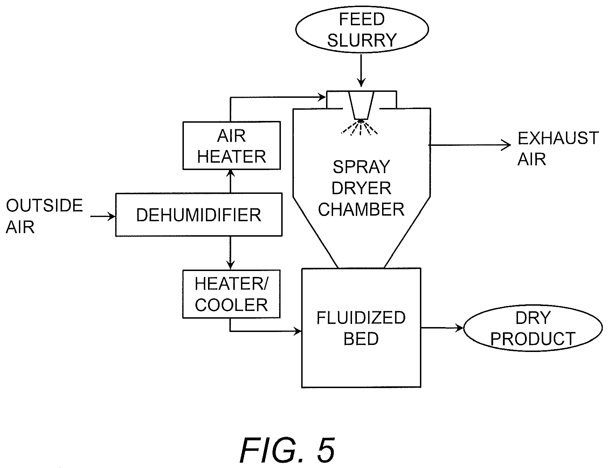

Control powders were produced by a conventional process conditions and Modified powders were produced by the instant modified process (Figure 5), according to the conditions listed in Table 3. In both cases, a conventional spray dryer without an integrated fluid-bed was used.

**TABLE 3**

| Spray Dryer Operating Parameter | Standard | Modified |
|---|---|---|
| Inlet air temperature (°C) | 170 - 210 | < 100 |
| Inlet air humidity (g H₂O/kg dry air) | 2 - 18 | 0 - 4 |
| Outlet air temperature (°C) | 80 - 100 | 35 - 55 |
| Outlet air humidity (g H₂O/kg dry air) | 45 - 55 | 10 - 20 |
| Atomizer type | Rotary Disc | Rotary Disc or Nozzle |

All formulations ran well with minimal hold-up, sticking, or other issues in the conventional spray dryer.

### Example 2: Retention of Volatile Compounds in Modified Orange Flavor Formulation

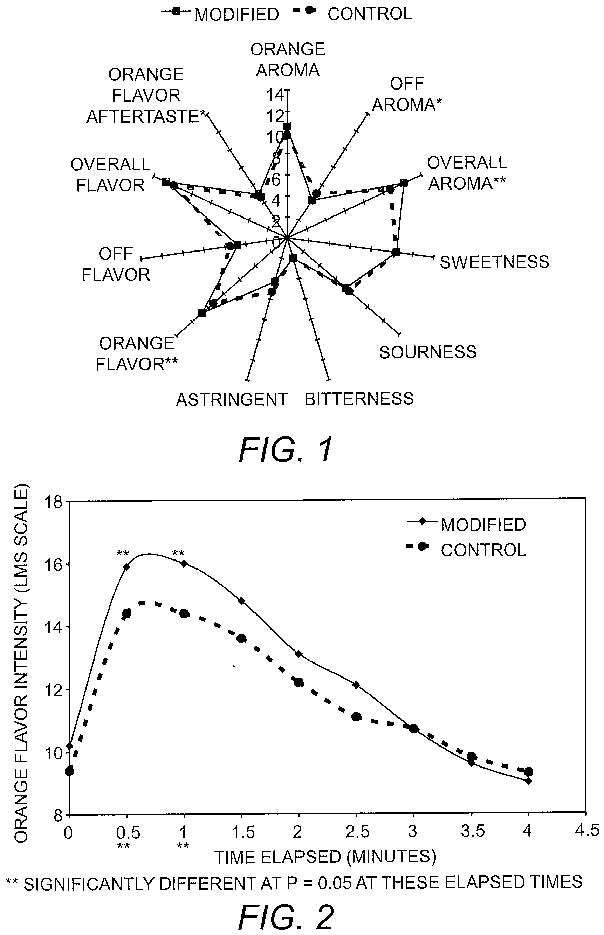

Using GC-FID (gas chromatography-flame ionization detector) analysis, the volatile profile of the Orange Flavor formulations in Example 1 was determined. This analysis indicated that the retention of specific volatile materials for the Modified powder compared to the level in the emulsion were approximately 72%, 75%, and 52% for ethyl propionate, ethyl butyrate, and acetaldehyde, respectively. Table 4 indicated the ratio of volatiles retained in the Modified powder in comparison to the Control powder. Sensory tests showed benefit of the Modified powder over the Control powder in a beverage tasting solution (significantly greater overall aroma and orange flavor; Figure 1) and in chewing gum (significantly greater orange flavor intensity at the 30 and 60 second intervals; Figure 2) .

**TABLE 4**

| Orange Flavor | Ethyl Propionate | Ethyl Butyrate | Acetaldehyde |
|---|---|---|---|
| Modified | 2.3 | 1.6 | 1.8 |
| Control | 1.0 | 1.0 | 1.0 |

### Example 3: Retention of Volatile Compounds in Modified Berry Flavor Formulation

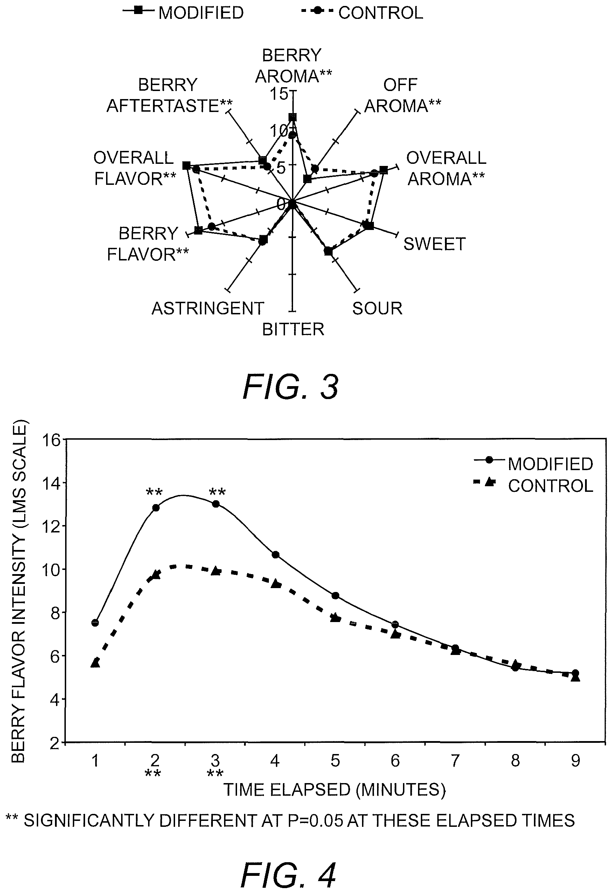

Using GC-FID analysis, the volatile profile of the Berry Flavor formulations in Example 1 was determined. This analysis indicated that the retention of specific volatile materials for the Modified powder compared to the level in the emulsion were approximately 24%, 35%, and 87% for dimethyl sulfide, ethyl acetate, and ethyl butyrate, respectively. Table 5 indicated the ratio of volatiles retained in the modified powder in comparison to the Control powder. Sensory tests showed benefit of the Modified powder over the Control powder in a beverage tasting solution (significantly greater berry aroma and flavor, among others; Figure 3) and in chewing gum (significantly greater berry flavor intensity at the 30 and 60 second intervals; Figure 4).

**TABLE 5**

| Berry Flavor | Dimethyl Sulfide | Ethyl Acetate | Ethyl Butyrate |
|---|---|---|---|
| Modified | 12.7 | 13.4 | 4.5 |
| Control | 1.0 | 1.0 | 1.0 |

### Example 4: Effects of Dryer Process Temperatures

To determine the effect of dryer process temperatures on the physical properties and flavor quality of a citrus flavor, different spray dryer air inlet and outlet temperatures were utilized. The resulting volatile compound content, and flavor strength and aroma as determined by an expert panel are presented in Table 6.

**TABLE 6**

| Inlet/Outlet Temperature (°C) | Water activity | Acetaldehyde Content (% of Nominal) | Flavor Strength Ranking | Aroma Strength Ranking |
|---|---|---|---|---|
| 190/90 | 0.16 | 37 | 1 | 1 |
| 93/45 | 0.27 | 42 | 2* | 2* |

| | | | | |
|---|---|---|---|---|
| *2 = higher. | | | | |

In addition to the above results, both spray-dried compositions exhibited free-flowing properties after 7 weeks at 40°C in a closed container. These results indicate that an air inlet temperature below 100°C reduces loss of volatile flavor compounds, provides improved sensory intensity, while maintaining water activity of the product at a level that prevents caking when exposed to above ambient temperatures.

### Example 5: Stability of Fruit and Mint Flavors in Chewing Gum

The stability of apple and mint flavors in chewing gum were evaluated. Flavor compositions were spray-dried in accordance with the instant method, formulated with guillaja extract or soap bark extract and incorporated into chewing gum. The stability of the flavor was evaluated by an expert panel after storage at 32°C for 2 or 12 weeks or 21°C for 12 weeks. The results of prototype apple-flavored gum, as compared to a control, are presented in Table 7 and Figure 6. The control samples were spray dried flavors processed using conventional drying conditions.

**TABLE 7**

| Apple Flavored Gum | Prototype Flavor Stability | | | Control Flavor Stability | | |
|---|---|---|---|---|---|---|
| | 32°C | | 21°C | 32°C | | 21°C |
| | 2 weeks | 12 weeks | 12 weeks | 2 weeks | 12 weeks | 12 weeks |
| Candy Banana | 4.5 | 4.5 | 4 | 4 | 2 | 3 |
| Green Apple | 5.5 | 4 | 4.5 | 3 | 2 | 3 |
| Ripe Estery | 6 | 5 | 5.5 | 4 | 3 | 4 |
| Sweet | n.d. | 6 | 6 | n.d. | 5 | 5 |
| Sour | n.d. | 4 | 4 | n.d. | 3 | 3.5 |
| Salivating | n.d. | 4 | 5 | n.d. | 3 | 4 |
| Astringent | n.d. | 3 | 3 | n.d. | 2.5 | 3 |

| | | | | | | |
|---|---|---|---|---|---|---|
| Scale: 10-point scale (10=highest). Expert panel of four testers. n.d.= not determined. | | | | | | |

The analysis presented in Table 7 indicates that the apple flavor produced by the instant method was as stable as a conventional spray-dried composition at 21°C (12 weeks) or 32°C (12 weeks). However, the impact of the apple flavor produced by the instant method was stronger after storage at 32°C for 12 weeks than that of the conventional spray-dried composition stored at 21°C for 12 weeks.

The results of prototype mint-flavored gum, as compared to a control, are presented in Table 8.

**TABLE 8**

| Mint Flavored Gum | Prototype Flavor Stability | | | Control Flavor Stability | | |
|---|---|---|---|---|---|---|
| | 32°C | | 21°C | 32°C | | 21°C |
| | 2 weeks | 12 weeks | 12 weeks | 2 weeks | 12 weeks | 12 weeks |
| Peppermint | 6 | 4.5 | 5.5 | 4.5 | 3 | 3.5 |
| Menthol | 5.5 | 4.5 | 5.5 | 5.5 | 3 | 3.5 |
| Sweet Creamy | 5 | 4 | 4.5 | 4.5 | 3.5 | 3.5 |
| Sweet | n.d. | 6.5 | 7 | n.d. | 6 | 7 |
| Bitter | n.d. | 1 | 1 | n.d. | 1 | 1 |
| Astringent | n.d. | 1 | 1 | n.d. | 1 | 1 |
| Off-note (plastic) | n.d. | 0 | 0 | n.d. | 1 | 3 |

| | | | | | | |
|---|---|---|---|---|---|---|
| Scale: 10-point scale (10=highest). Four testers. n.d.= not determined. | | | | | | |

The analysis presented in Table 8 indicates that the mint flavor produced by the instant method was as stable as a conventional spray-dried composition at 21°C (12 weeks) or 32°C (12 weeks). However, the impact of the mint flavor produced by the instant method was stronger after storage at 32°C for 12 weeks than that of the conventional spray-dried composition stored at 21°C for 12 weeks.

Overall, the results of this analysis indicated that the desirable sensory attributes of apple and mint flavors were better maintained in chewing gum using the prototype flavor over 12 weeks at 32°C.

### Example 6: Stability of Raspberry Flavor in Powdered Soft Drink Mix

The stability of raspberry flavor in powdered soft drink mix was evaluated. A raspberry flavor composition was spray-dried in accordance with the instant method, incorporated into a powdered soft drink mix, and the stability of the flavor was evaluated by an expert panel after storage for 8 weeks at 38°C. The results of the prototype soft drink mix containing the instant spray-dried flavor composition, as compared to a control, are presented in Table 9. The control sample was a spray dry flavor processed using conventional drying conditions.

**TABLE 9**

| Sample | Degree of Difference* | Description |
|---|---|---|
| Prototype | 9 | No off-notes present. Flavor attributes similar to refrigerated reference. |
| Control | 7 | Lacking fullness, sweetness, loss of impact and juiciness compared to refrigerated reference. |

| | | |
|---|---|---|
| *Scale: 1-3: very large difference, off-notes present; 10: not different from refrigerated reference. | | |

This analysis indicated that after 8 weeks of accelerated storage, the raspberry prototype maintained flavor quality.

### Example 7: Evaluation of Savory Broths

Spray-dried flavor compositions, prepared in accordance with the instant method, were incorporated into savory broths and attributes of the broths were assessed by a panel of consumers. The attributes of the prototype broths, as compared to a control, are presented in Table 10. The control broths were prepared from spray dry flavors processed using conventional drying conditions.

**TABLE 10**

| Flavor Type | % Preference for Prototype* | Attributes** Prototype vs. Control |
|---|---|---|
| Chicken | 77 (N=65, p=0.0001) | More white meat flavor, fresher, more balanced, rounder flavor, more overall aroma |
| Beef | 59 (N=63, p=0.17) | More overall aroma, more roasted flavor, bolder flavor, more memorable |

| | | |
|---|---|---|
| *Paired comparison forced choice preference test among category users. **Significantly different at greater than or equal to 90% confidence interval. | | |

Consumer data showed statistically significant preference for the prototype flavors. This is further supported by the attributes selected by consumers to describe the flavor quality of the prototypes.

### Example 8: Sensory Stability of Neat Powders in High Barrier Packaging

The stability of various flavor prototypes in high barrier packaging (FRESHTEK) was assessed after storage for 6, 12, or 18 weeks at 40°C. The attributes of the prototype powders are presented in Table 11.

**TABLE 11**

| Prototype | Description* | | |
|---|---|---|---|
| | 6 weeks | 12 weeks | 18 weeks |
| Peach 11-71 | Acceptable | Acceptable | Acceptable |
| Apple 11-58 | Acceptable | Acceptable Slight off-notes | Borderline Slight off-notes, noticeably weaker than reference |
| Orange Valencia 11-299 | Acceptable | Acceptable No oxidized notes | Acceptable No oxidized notes |
| Lime 11-331 | Acceptable | Acceptable No oxidized notes, slightly weaker than reference | Borderline No oxidized notes, noticeably weaker than reference |
| Lemon Brazilian 11-315 | Acceptable | Acceptable No oxidized notes | Acceptable No oxidized notes |

| | | | |
|---|---|---|---|
| *Expert panel evaluation, reference sample was kept frozen during storage study. | | | |

## Claims

1. A method of producing a stable spray-dried flavor composition, the method comprising
preparing an emulsion from a flavor composition comprising a flavor that contains volatile compounds; a solvent; a carrier material; and an emulsifier or surfactant, wherein the flavor and the carrier material comprise between 40% and 70% by weight of the emulsion,
spray drying the emulsion in a spray dryer having an inlet temperature of less than 100°C and an air inlet dew point -10°C to 5°C, wherein the volatile compounds are present in the spray-dried flavor composition in an amount that is at least 20% of the volatile compounds originally contained in the flavor, and wherein the spray-dried flavor composition further comprises between 0.2% to 0.5% quillaja extract as an emulsifier.

2. The method of claim 1, wherein the spray-dried flavor composition is further dried in a fluid bed chamber attached at the spray dryer outlet, wherein the temperature of the air of the fluid-bed unit is at or below the outlet temperature of the spray dryer.

3. The method of claim 1, wherein the volatile compounds are acetaldehydes, dimethyl sulfides, ethyl acetates, ethyl propionates, methyl butyrates, or ethyl butyrates.

4. The method of claim 1, wherein the volatile compounds have a boiling point of less than 200°C, less than 100°C, or less than 60°C.

5. The method of claim 1, wherein the solvent is a volatile solvent;
wherein, optionally, the volatile solvent is selected from ethanol, ethyl acetate, acetone, triglycerides, vegetable oils, animal fats, and triacetin.

6. The method of claim 1, wherein the volatile compounds are present in the emulsion in an amount that is at least 80% of the volatile compounds originally contained in the flavor.

7. The method of claim 1, wherein the emulsion contains between 55% and 65% flavor and/or carrier.

8. The method of claim 1, wherein air of the spray dryer is partially or wholly nitrogen or carbon dioxide.

9. The method of claim 1, wherein the air inlet temperature is in the range of 40°C to 99°C.

10. The method of claim 1, wherein the water activity of the composition is in the range of 0.1 to 0.6.

11. The method of producing a spray-dried flavor composition according to claim 1, providing a high intensity flavour, the method further comprising incorporating the high intensity flavor into gums, confections, oral care products, beverages, snacks, dairy products, soups, sauces, condiments, detergents, fabric softeners and other fabric care products, antiperspirants, deodorants, talc, kitty litter, hair care and styling products, personal care products, air fresheners, cereals, baked goods or cleaners.

12. The method of claim 11, comprising incorporating the high intensity flavor into a chewing gum or beverage.

13. The method of claim 1 or 11, wherein the active component in the quillaja extract is a saponin.

## Patentansprüche

1. Verfahren zur Herstellung einer stabilen sprühgetrockneten Aromastoffzusammensetzung, wobei das Verfahren umfasst:
Herstellen einer Emulsion aus einer Aromastoffzusammensetzung, die einen Aromastoff umfasst, der flüchtige Verbindungen enthält; einem Lösungsmittel; einem Trägermaterial; und einem Emulgator oder grenzflächenaktiven Mittel, wobei der Aromastoff und das Trägermaterial zwischen 40 Gew.-% und 70 Gew.-% der Emulsion bilden,
Sprühtrocknen der Emulsion in einem Sprühtrockner mit einer Einlasstemperatur von unter 100 °C und einem Lufteinlass-Taupunkt von -10 °C bis 5 °C, wobei die flüchtigen Verbindungen in der sprühgetrockneten Aromastoffzusammensetzung in einer Menge vorhanden sind, die wenigstens 20 % der flüchtigen Verbindungen beträgt, die ursprünglich in dem Aromastoff enthalten waren, und wobei die sprühgetrocknete Aromastoffzusammensetzung ferner zwischen 0,2 % und 0,5 % Quillajaextrakt als Emulgator umfasst.

2. Verfahren gemäß Anspruch 1, wobei die sprühgetrocknete Aromastoffzusammensetzung in einer Wirbelschichtkammer, die an dem Auslass des Sprühtrockners angebracht ist, weiter getrocknet wird, wobei die Temperatur der Luft in der Wirbelschichteinheit bei oder unter der Auslasstemperatur des Sprühtrockners liegt.

3. Verfahren gemäß Anspruch 1, wobei die flüchtigen Verbindungen Acetaldehyde, Dimethylsulfide, Ethylacetate, Ethylpropionate, Methylbutyrate oder Ethylbutyrate sind.

4. Verfahren gemäß Anspruch 1, wobei die flüchtigen Verbindungen einen Siedepunkt von unter 200 °C, unter 100 °C oder unter 60 °C aufweisen.

5. Verfahren gemäß Anspruch 1, wobei das Lösungsmittel ein flüchtiges Lösungsmittel ist;
wobei gegebenenfalls das flüchtige Lösungsmittel ausgewählt ist aus Ethanol, Ethylacetat, Aceton, Triglyceriden, Pflanzenölen, Tierfetten und Triacetin.

6. Verfahren gemäß Anspruch 1, wobei die flüchtigen Verbindungen in der Emulsion in einer Menge enthalten sind, die wenigstens 80 % der flüchtigen Verbindungen beträgt, die ursprünglich in dem Aromastoff enthalten waren.

7. Verfahren gemäß Anspruch 1, wobei die Emulsion zwischen 55 % und 65 % Aromastoff und/oder Träger enthält.

8. Verfahren gemäß Anspruch 1, wobei Luft des Sprühtrockners teilweise oder vollständig Stickstoff oder Kohlendioxid ist.

9. Verfahren gemäß Anspruch 1, wobei die Lufteinlasstemperatur in dem Bereich von 40 °C bis 99 °C liegt.

10. Verfahren gemäß Anspruch 1, wobei die Wasseraktivität der Zusammensetzung in dem Bereich von 0,1 bis 0,6 liegt.

11. Verfahren zur Herstellung einer sprühgetrockneten Aromastoffzusammensetzung gemäß Anspruch 1, die einen Aromastoff mit hoher Intensität bereitstellt, wobei das Verfahren ferner Einverleiben des Aromastoffs mit hoher Intensität in Gummis, Süßwaren, Mundpflegeprodukte, Getränke, Snacks, Milchprodukte, Suppen, Saucen, Würzmittel, Detergenzien, Gewebeweichmacher und andere Gewebepflegeprodukte, Antiperspirants, Deodorants, Talkum, Katzenstreu, Haarpflege- und Stylingprodukte, Körperpflegeprodukte, Lufterfrischer, Getreide, Backwaren oder Reiniger umfasst.

12. Verfahren gemäß Anspruch 11, umfassend Einverleiben des Aromastoffs mit hoher Intensität in einen Kaugummi oder ein Getränk.

13. Verfahren gemäß Anspruch 1 oder 11, wobei die aktive Komponente in dem Quillajaextrakt ein Saponin ist.

## Revendications

1. Méthode de production d'une composition d'arôme séchée par pulvérisation et stable, la méthode comprenant :
la préparation d'une émulsion à partir d'une composition d'arôme comprenant un arôme qui contient des composés volatils ; un solvant ; un matériau véhicule ; et un émulsifiant ou agent tensioactif ; où l'arôme et le matériau véhicule constituent entre 40% et 70% en poids de l'émulsion ;
le séchage par pulvérisation de l'émulsion dans un séchoir-atomiseur ayant une température d'entrée inférieure à 100°C et un point de rosée d'entrée d'air allant de -10°C à 5°C, où les composés volatils sont présents dans la composition d'arôme séchée par pulvérisation selon une quantité qui constitue au moins 20% des composés volatils contenus à l'origine dans l'arôme, et où la composition d'arôme séchée par pulvérisation comprend en outre de 0,2% à 0,5% d'extrait de quillaja comme émulsifiant.

2. Méthode selon la revendication 1, dans laquelle la composition d'arôme séchée par pulvérisation est en outre séchée dans une chambre à lit fluidisé fixée au niveau de la sortie du séchoir-atomiseur, où la température de l'air de l'unité de lit fluidisé est égale ou inférieure à la température de sortie du séchoir-atomiseur.

3. Méthode selon la revendication 1, dans laquelle les composés volatils sont des acétaldéhydes, des sulfures de diméthyle, des acétates d'éthyle, des propionates d'éthyle, des butyrates de méthyle, ou des butyrates d'éthyle.

4. Méthode selon la revendication 1, dans laquelle les composés volatils possèdent un point d'ébullition inférieur à 200°C, inférieur à 100°C, ou inférieur à 60°C.

5. Méthode selon la revendication 1, dans laquelle le solvant est un solvant volatil ;
où, éventuellement, le solvant volatil est choisi parmi l'éthanol, l'acétate d'éthyle, l'acétone, les triglycérides, les huiles végétales, les matières grasses animales, et la triacétine.

6. Méthode selon la revendication 1, dans laquelle les composés volatils sont présents dans l'émulsion selon une quantité qui constitue au moins 80% des composés volatils contenus à l'origine dans l'arôme.

7. Méthode selon la revendication 1, dans laquelle l'émulsion contient entre 55% et 65% d'arôme et/ou de véhicule.

8. Méthode selon la revendication 1, dans laquelle l'air du séchoir-atomiseur est constitué partiellement ou totalement d'azote ou de dioxyde de carbone.

9. Méthode selon la revendication 1, dans laquelle la température de l'entrée de l'air se trouve dans la plage allant de 40°C à 99°C.

10. Méthode selon la revendication 1, dans laquelle l'activité de l'eau de la composition se trouve dans la plage allant de 0,1 à 0,6.

11. Méthode de production d'une composition d'arôme séchée par pulvérisation selon la revendication 1, fournissant un arôme de haute intensité, la méthode comprenant en outre l'incorporation de l'arôme de haute intensité dans des gommes, des confiseries, des produits de soin oral, des boissons, des en-cas, des produits laitiers, des soupes, des sauces, des condiments, des détergents, des assouplissants textile et autres produits d'entretien du linge, des antitranspirants, des déodorants, du talc, de la litière pour chats, des produits de soin et de coiffage des cheveux, des produits de soin personnel, des assainisseurs d'air, des céréales, des produits cuits ou des nettoyants.

12. Méthode selon la revendication 11, comprenant l'incorporation de l'arôme de haute intensité dans un chewing-gum ou une boisson.

13. Méthode selon la revendication 1 ou 11, dans laquelle le composant actif dans l'extrait de quillaja est une saponine.
